Europäisches Patentamt

European Patent Office

Office européen des brevets

(11) Veröffentlichungsnummer: **0 595 206 A2**

## (12) EUROPÄISCHE PATENTANMELDUNG

(21) Anmeldenummer: **93117089.8**

(51) Int. Cl.⁵: **H04B 10/16**

(22) Anmeldetag: **21.10.93**

(30) Priorität: **30.10.92 DE 4236828**

(43) Veröffentlichungstag der Anmeldung:
**04.05.94 Patentblatt 94/18**

(84) Benannte Vertragsstaaten:
**BE DE FR GB IT**

(71) Anmelder: **SIEMENS AKTIENGESELLSCHAFT**
**Wittelsbacherplatz 2**
**D-80333 München(DE)**

(72) Erfinder: **Noé, Reinhold, Prof. Dr. Ing.**
**Helmerner Weg 2**
**D-33100 Paderborn(DE)**

(54) **Synchronisationseinrichtung für optische Pulse.**

(57) 2.1 Der Erfindung liegt die Aufgabe zugrunde, eine Einrichtung zur Erzeugung von zu optischen Referenzpulsen (RP) phasenstarr gekoppelten optischen Signalpulsen (SP) so auszubilden, daß die Arbeitsgeschwindigkeit bandbreitebegrenzender elektronischer Einrichtungen und opto-elektrischer oder elektro-optischer Wandler die erreichbare maximale Arbeitstaktfrequenz der Einrichtung nicht beeinträchtigt.

2.2 Dazu weist die Einrichtung in wesentlichen Teilen, wie z.B. dem Phasenvergleicher(PV), Regler (R), und/oder Signalpulserzeuger (SPE), gegenüber der maximalen Arbeitstaktfrequenz der Einrichtung niederfrequentere Nutzanteile der verwendeten elektrischen Signale und mindestens einen nichtlinearen optischen Effekt auf.

2.3 Für optische Signalregeneratoren, Demultiplexer oder Pulsfrequenzsynchronisationseinrichtungen

FIG 1

Die Erfindung betrifft Einrichtungen nach dem Oberbegriff der Ansprüche 1 bis 6.

Bei der optischen Signalübertragung werden oft Quellen periodisch sich wiederholender optischer Signalpulse SP benötigt, deren Signalpulstaktfrequenz SPTF, d.h. Wiederholfrequenz der Signalpulse SP, phasenstarr bezüglich der Taktfrequenz RPTF einer Folge optischer Referenzpulse RP, die auch moduliert sein können, eingerastet ist. Insbesondere für optische Taktrückgewinnungen, welche beispielsweise für auf nichtlinearen optischen Effekten beruhende Regeneratoren von Datensignalen benötigt werden, ist eine solche Einrichtung wünschenswert. Aus Electronics Letters, 2. Juli 1992, Band 28, No. 4, Seiten 1350 bis 1352, ist beispielsweise ein auf dem Kerr-Effekt als optischer Nichtlinearität basierender Regenerator für optische Signale beschrieben. Als Schaltelement dient ein nichtlinearer optischer Faserschleifenspiegel, bei dem das empfangene, zu regenerierende Datensignal als Pumpsignal und das Taktsignal als Probensignal dient. Die erwähnte Arbeit beschreibt noch keinen kompletten Regenerator, weil nur eine Frequenz - nicht aber eine Phasensynchronisation vorgesehen ist.

In der Elektronik beispielsweise verwendet man zur phasenstarren Synchronisation einer Quelle periodischer Signale mit einer anderen Quelle periodischer oder quasiperiodischer Signale in vielen Fällen Phasenregelkreise, auch bekannt unter dem englischen Ausdruck 'phase-locked loop'. Solche Einrichtungen sind beispielsweise aus dem Buch 'Phaselock techniques', F.M. Gardner, Verlag John Wiley, New York Chichester Brisbane Toronto, 1978, bekannt. Ein Nachteil dieser rein elektronischen Phasenregelkreise ist die Beschränkung auf Frequenzen, die noch elektronisch verarbeitet werden können, typischerweise maximal 100 GHz.

Aus Electronics Letters, Band 26, No. 10, 10. Mai 1990, Seiten 648-649 und aus der Dissertation 'Stabilisierung und Synchronisation von Gas-Lasern für den optischen Überlagerungsempfang' von Georg Fischer an der Fakultät für Elektrotechnik und Informationstechnik der Technischen Universität München, 6.9.1988, sind optische Phasenregelkreise bekannt. In diesen optischen Phasenregelkreisen werden Phase und Frequenz eines optischen Signal auf Phase und Frequenz eines anderen optischen Signals eingerastet. Diese bekannten Einrichtungen lassen sich jedoch nicht für die phasenstarre Synchronisation der Taktfrequenz SPTF von optischen Signalpulsen SP einsetzen, da in diesen bekannten Einrichtungen nicht eine Pulstaktfrequenz, sondern vielmehr die optische Frequenz, d.h. der Quotient aus Lichtgeschwindigkeit und optischer Wellenlänge, auf die optische Frequenz eines Referenzsignals phasenstarr eingerastet wird.

Eine ganze Reihe von Veröffentlichungen beschäftigt sich mit dem Problem, aus einer Folge optischer Referenzpulse RP eine periodische Folge von Signalpulsen SP gleicher Frequenz zu erzeugen. Diesbezügliche Berichte finden sich beispielsweise in Electronics Letters, Band 28, No. 8, 9. April 1992, Seiten 738 bis 739, in Electronics Letters, Band 24, No. 14, 7. Juli 1988, Seiten 848 bis 850, im Tagungsband der IOOC/ECOC '91, Paris, September 1991, Band 1, Beitrag MoC1-2, Seiten 77 bis 80, im Tagungsband der Optical Fiber Communication Conference (OFC '92), San José, USA, Band 1, Beitrag ThB1, Seite 193, in IEEE Photonics Technology Letters, Band 2, No. 3, März 1990, Seiten 203 bis 204, in Electronics Letters, Band 28, No. 19, 10. September 1992, Seiten 1814-1816, in IEEE Photonics Technology Letters, Band 3, No. 1, Januar 1991, Seiten 65 bis 67, in IEEE Photonics Technology Letters, Band 3, No. 10, Oktober 1991, Seiten 942 bis 944, in Electronics Letters, Band 28, No. 18, 27. August 1992, Seiten 1741-1743, und unter dem Titel 'All-optical phase-locked oscillator' von den Autoren N.A. Whitaker, Jr., H.H. Houh, H. Avramopoulos im Tagungsband (Technical Digest) der Laser and Electro-Optical Society (LEOS), 1990, Boston. Gemeinsam ist allen diesen Beiträgen, auch dem zuletzt erwähnten mit dem irreführenden Titel 'All-optical phase-locked oscillator', daß zwar eine Synchronisation der Signalpulstaktfrequenz SPTF bezüglich der Referenzpulstaktfrequenz RPTF erreicht wird, daß aber Änderungen der Signalpulstaktfrequenz SPTF Änderungen der Phasenbeziehung zwischen Signalpulstaktfrequenz SPTF gegenüber der Referenzpulstaktfrequenz RPTF hervorrufen. Solche durch Phasenänderungen gekennzeichnete Synchronisationen bezeichnet man als nicht phasenstarr, während bei phasenstarrer Synchronisation Phasenänderungen auch bei Änderungen der Referenzpulstaktfrequenz RPTF nicht auftreten. Der Grund für dieses Verhalten der Einrichtungen der erwähnten Arbeiten liegt darin, daß diese Einrichtungen jeweils ein Analogon eines Resonators bilden, der im wesentlichen mit der Taktfrequenz RPTF der Referenzpulse angeregt wird. Je höher die Güte des Resonators im Interesse einer hohen spektralen Reinheit der erzeugten Signalpulse SP gewählt werden muß, desto geringere Änderungen der Referenzpulstaktfrequenz RPTF sind bereits ausreichend, eine Phasenverschiebung der Taktfrequenz SPTF der Signalpulse SP gegenüber der Taktfrequenz RPTF der Referenzpulse RP zu verursachen. In der Praxis erweist sich deshalb die Phase einer in nicht phasenstarrer Weise an die Taktfrequenz RPTF von Referenzpulsen RP gekoppelten Taktfrequenz SPTF von Signalpulsen SP als zu instabil. Eine stabile Phasenbeziehung ist dagegen insbesondere bei der Anwendung einer solchen Einrichtung zur optischen Taktrückgewinnung notwendig, etwa zur Erweiterung von, und/oder Verwendung in einem in Electronics Letters, Band 28, No. 14, 2. Juli 1992, Seiten 1350 bis 1352 veröffentlichten optischen Regenerator. Ein solcher Regenerator kann auch vorteilhaft gemäß der Patentanmeldung P 42 35 969.4 polarisationsunabhängig ausgestaltet sein.

Einige Veröffentlichungen beschäftigen sich mit dem Problem, aus einer Folge optischer Referenzpulse RP in phasenstarrer Weise eine periodische Folge von Signalpulsen SP gleicher Frequenz zu erzeugen.

Ein diesbezüglicher Bericht findet sich im Tagungsband der ECOC '89, Göteborg, September 1989, Band 1, Beitrag MoB4-5, Seiten 58 bis 61. In diesem Beispiel muß die als optischer Signalpulserzeuger verwendete Laserdiode mit einem Wechselsignal von ca. 1,8 GHz angesteuert werden. Eine Steigerung der Signalpulstaktfrequenz auf höhere Werte als einige 10 GHz, oder gar Hunderte von GHz, wäre in diesem Beispiel wegen der begrenzten Modulationsbandbreite von Lasern nicht möglich.

Eine weiterer diesbezüglicher Bericht findet sich in Electronics Letters, Band 28, No. 20, 1992, Seiten 1920 bis 1922. Hier wird eine selbstpulsierende Laserdiode als Signalpulserzeuger eingesetzt. Die Phasenregelschleife ist allerdings in konventioneller Weise durch elektronische Schaltungen realisiert, deren höchste zu verarbeitende Frequenz etwa gleich der erzeugten Pulsfrequenz ist. Die elektronischen Schaltungen und/oder der notwendige Photodetektor, für den hier ein Absorber verwendet wird, können nach dem Stand der Technik nicht bei Signalpulstaktfrequenzen realisiert werden, die höher sind als einige 10 GHz.

In vielen Fällen sind die Signalpulstaktfrequenz SPTF und die Referenzpulstaktfrequenz RPTF gleich hoch. In weiteren Fällen ist die eine der beiden doppelt, oder 4, 8, 16, ... mal so hoch wie die andere. Die maximale Arbeitstaktfrequenz einer Einrichtung zur Erzeugung von zu optischen Referenzpulsen phasenstarr oder nicht phasenstarr gekoppelten optischen Signalpulsen ist, wenn die Referenzpulstaktfrequenz RPTF und die Signalpulstaktfrequenz SPTF gleich hoch sind, gleich jeder dieser beiden Pulstaktfrequenzen, und ist, wenn die Referenzpulstaktfrequenz RPTF und die Signalpulstaktfrequenz SPTF nicht gleich hoch sind, gleich der höheren dieser beiden Pulstaktfrequenzen. Die maximale Arbeitstaktfrequenz ist also gleich einer der beiden Frequenzen Referenzpulstaktfrequenz RPTF und Signalpulstaktfrequenz SPTF, die nicht niedriger als die andere dieser beiden Pulstaktfrequenzen ist.

Es läßt sich feststellen, daß der Stand der Technik die beiden Ziele

- Phasenstarrheit der Synchronisation und
- Unabhängigkeit der maximalen Arbeitstaktfrequenz vom frequenzbegrenzenden Einfluß elektronischer Effekte

nicht gleichzeitig erfüllt.

Der Erfindung liegt also die Aufgabe zugrunde, eine Einrichtung zur Erzeugung von zu optischen Referenzpulsen RP phasenstarr gekoppelten optischen Signalpulsen SP so auszubilden, daß die Arbeitsgeschwindigkeit bandbreitebegrenzender elektronischer Einrichtungen und opto-elektrischer oder elektro-optischer Wandler die erreichbare maximale Arbeitstaktfrequenz der Einrichtung nicht beeinträchtigt.

Diese Aufgabe wird ausgehend von einer Einrichtung zur Erzeugung von zu optischen Referenzpulsen phasenstarr gekoppelten optischen Signalpulsen der eingangs genannten Art erfindungsgemäß durch die im kennzeichnenden Teil des Anspruchs 1 angegebenen Merkmale gelöst.

Die Erfindung bietet in vorteilhafter Weise die Möglichkeit, bei der Erzeugung von bezüglich Referenzpulsen RP synchronisierten Signalpulsen SP weder auf Phasenstarrheit verzichten zu müssen, noch durch die begrenzte Arbeitsgeschwindigkeit von Elektronik und elektro-optischen oder opto-elektrischen Wandlern in der Wahl der gewünschten maximalen Arbeitstaktfrequenz beschränkt zu sein. Dadurch ist weder die Wahl der Referenzpulstaktfrequenz RPTF noch die Wahl der Signalpulstaktfrequenz SPTF durch die begrenzte Arbeitsgeschwindigkeit dieser Komponenten beschränkt. Zur erfindungsgemäßen Vermeidung von hochfrequenten, d.h. als Frequenz etwa die maximale Arbeitstaktfrequenz aufweisenden Nutzanteilen von elektrischen Signalen werden die für die Synchronisation der Signalpulstaktfrequenz SPTF bezüglich der Referenzpulstaktfrequenz RPTF verwendeten Teile der Einrichtung, die für die Phasenstarrheit zwischen der Signalpulstaktfrequenz SPTF und der Referenzpulstaktfrequenz RPTF verwendeten Teile der Einrichtung und/oder der zum Vergleich der Phasen der Referenzpulstaktfrequenz RPTF und der Signalpulstaktfrequenz SPTF benötigte Phasenvergleicher PV wenigstens teilweise mit Hilfe mindestens eines nichtlinearen optischen Effekts ausgeführt. Auf diese Weise wird sichergestellt, daß gegenüber dem Stand der Technik eine drastische Erhöhung maximalen Arbeitstaktfrequenz, also der Signalpulstaktfrequenz SPTF und/oder Referenzpulstaktfrequenz RPTF, ermöglicht wird.

Insbesondere ist bei Verwendung eines bezüglich seiner Moden synchronisierten Lasers gemäß der in Appl. Phys. Lett., Band 58, No. 12, 25. März 1991, auf Seiten 1253 bis 1255 vorgestellten Arbeit als Signalpulserzeuger SPE und Verwendung eines auf dem optischen Kerr-Effekt, z.B. in einem Lichtwellenleiter aus Quarzglas, beruhenden Phasenvergleichers PV und ggf. auch Verwendung einer optischen Synchronisation anzunehmen, daß die maximale Arbeitstaktfrequenz auf 350 GHz gesteigert werden kann.

Die Erfindung wird anhand eines in der Zeichnung dargestellten Ausführungsbeispiels näher erläutert. Es zeigen:

Figur 1 ein Blockschaltbild einer Einrichtung zur Erzeugung von zu optischen Referenzpulsen phasenstarr gekoppelten optischen Signalpulsen unter Verwendung von optischen Effekten

Figur 2 den zeitlichen Verlauf von Signalen, die in einem in

Figur 3 gezeigten Ausführungsbeispiel eines Phasenvergleichers in Form eines nichtlinearen optischen Faserschleifenspiegels auftreten.

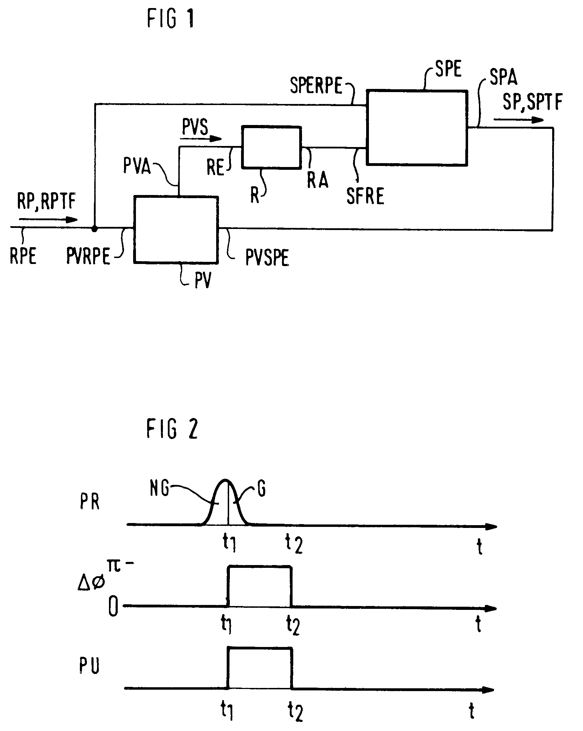

Die Einrichtung nach der Figur 1 enthält eine bekannte Phasenregelschleife mit Signalpulserzeuger SPE, Phasenvergleicher PV und Regler R.

Der Signalpulserzeuger SPE erzeugt periodische optische Signalpulse SP und stellt sie an einem Signalpulsausgang SPA zur Verfügung. Die Signalpulstaktfrequenz SPTF der Signalpulse SP soll bezüglich der Referenzpulstaktfrequenz RPTF von Referenzpulsen RP phasenstarr synchronisiert werden. Die Referenzpulse RP werden an einem Referenzpulseingang RPE der Einrichtung eingespeist. An einem Signalpulseingang PVSPE des Phasenvergleichers PV werden die Signalpulse SP und an einem Referenzpulseingang PVRPE werden die Referenzpulse RP eingespeist. An einem Phasenvergleichsausgang PVA des Phasenvergleichers PV tritt ein Phasenvergleichssignal PVS auf, das wenigstens für kleine Beträge der Differenz zwischen dem n-fachen der Phase der Signalpulstaktfrequenz SPTF der Signalpulse SP und dem m-fachen der Phase der Referenzpulstaktfrequenz RPTF der Referenzpulse RP proportional zu dieser Differenz ist, wobei sowohl m als auch n natürliche Zahlen sind. Im eingerasteten Zustand beträgt diese Differenz gleich Null. Das führt dazu, daß die Signalpulstaktfrequenz SPTF gleich dem m/n-fachen der Referenzpulstaktfrequenz RPTF beträgt. Die Signalpulse SP werden vom Signalpulsausgang SPA in der Regel nicht nur dem Signalpulseingang PVSPE des Phasenvergleichers PV, sondern auch noch weiteren Verbrauchern zugeleitet. Bei Verwendung der erfindungsgemäßen Einrichtung in optischen Datenregeneratoren ist ein solcher Verbraucher der optische Entscheider bzw. dessen Taktsignaleingang. Ein Eingang RE des Reglers R ist mit dem Phasenvergleichsausgang PVA des Phasenvergleichers PV, an dem ein Phasenvergleichssignal PVS auftritt, verbunden. Der Regler R weist außerdem einen Ausgang RA auf, der mit einem Signalfrequenzregeleingang SFRE des Signalpulserzeugers SPE verbunden ist. Das Zusammenspiel von Phasenvergleicher PV, Regler R und Signalpulserzeuger SPE in Form einer Rückkopplungsschleife ermöglicht die Phasenstarrheit der angestrebten Synchronisation. Diese Phasenregelschleife wird nun entsprechend der Erfindung verändert.

Die erfindungsgemäße Ausführung der Einrichtung unter Anwendung mindestens eines nichtlinearen optischen Effekts hat den Vorteil, daß die optischen Signalverarbeitungsfunktionen nicht wie bei linearen optischen Effekten im wesentlichen auf Verstärkung und Dämpfung beschränkt sind, sondern daß sich auch kompliziertere Funktionen wie Multiplikation und der damit eng verwandte Phasenvergleich von Pulsen wenigstens näherungsweise verwirklichen lassen.

In vielen optischen Materialien ist der optische Kerr-Effekt der stärkste nichtlineare optische Effekt. Er besitzt außerdem zumindest in Quarzglas eine extrem kurze Ansprechzeit, die wahrscheinlich im Femtosekundenbereich liegt. Deshalb ist es vorteilhaft, als nichtlinearen optischen Effekt den Kerr-Effekt zu verwenden.

In manchen anderen Materialien, z.B. in optisch verstärkenden Elementen wie Laserverstärkern und insbesondere Halbleiter-Laserverstärkern, ist es günstig, die Gewinnsättigung als nichtlinearen optischen Effekt einzusetzen. In solchen Fällen wird das verstärkende Element gepumpt, z.B. durch Strominjektion in einen Halbleiter-Laserverstärker, sodaß es verstärkt. Die Gewinnsättigung führt dazu, daß ein Signal in Anwesenheit eines genügend starken, zweiten Signals unterschiedlicher Wellenlänge und/oder Polarisation weniger verstärkt wird als bei Abwesenheit des zweiten Signals.

Die nichtlineare Gewinnsättigung in Halbleiter-Laserverstärkern etwa hat gegenüber dem Kerr-Effekt in Quarzglas den Vorteil, daß sie schon mit weit geringeren Leistungen und weit geringeren optischen Weglängen auskommt.

Auch sättigbare Absorber, wie z.B. Halbleiter-Laserverstärker, die nicht elektrisch gepumpt werden, bilden einen nichtlinearen optischen Effekt, der sich erfindungsgemäß in der Einrichtung verwenden läßt. Während optische Signale oder optische Signalgemische niedriger Gesamtleistung von einem solchen Absorber absorbiert werden, werden Signale oder Signalgemische hoher Gesamtleistung weitgehend transmittiert, weil ihre hohe Leistungsdichte eine weitgehend komplette Inversion des Materials verursacht, sodaß sich die meisten Ladungsträger im angeregten Zustand befinden und keine Photonen absorbieren können.

Im Tagungsband der Optical Fiber Communication Conference (OFC '92), Band 1, Beitrag TuC5, auf den Seiten 15 und 16, ist ein nichtlinearer Wellenleiter-Gitter-Koppler beschrieben. Auch der hier beschriebene nichtlineare Effekt, der eine Änderung des Brechungsindex des Wellenleiters bewirkt, läßt sich vorteilhaft zur Realisierung der Erfindung einsetzen. In der erwähnten Arbeit führt die erwähnte Änderung des Brechungsindex des Wellenleiters zu einer Änderung der spektralen Übertragungsfunktion des Bauteils.

In einem wichtige Spezialfall weist n den Wert 1 auf, sodaß die Signalpulstaktfrequenz SPTF der Signalpulse SP das m-fache der Referenzpulstaktfrequenz RPTF der Referenzpulse RP ist. In einem weiteren wichtigen Spezialfall weist m den Wert 1 auf, sodaß die Referenzpulstaktfrequenz RPTF der Referenzpulse RP das n-fache der Signalpulstaktfrequenz SPTF der Signalpulse SP ist. Kombiniert man beide Spezialfälle, so ist die Referenzpulstaktfrequenz RPTF der Referenzpulse RP gleich der Signalpulstaktfrequenz SPTF der Signalpulse SP. In einem weiteren wichtigen Spezialfall, der auch mit den gerade genannten Spezialfällen kombiniert sein kann, sind die Referenzpulse RP und/oder Signalpulse SP bezüglich mindestens einem der Parameter Amplitude, Polarisation, Wellenlänge, Frequenz und Phase moduliert. Beispielsweise verwendet man modulierte, insbesondere amplitudenmodulierte, empfangene optische Datensignalpulse als Referenzpulse RP, wenn man aus diesen Datensignalpulsen Signalpulse SP, die als Datentaktsignal verwendet und/oder einem Verbraucher zugeführt werden können, gewinnen bzw. erzeugen will.

Aus der Literatur ist bekannt, daß sich Laser zur Erzeugung periodischer optischer Pulse einsetzen lassen. Am bekanntesten sind die Möglichkeiten der direkten Lasermodulation über beispielsweise einen Pumpstrom des Lasers, oder der externen Modulation durch einen optischen Modulator, der beispielsweise aus Lithiumniobat, Lithiumtantalat, polymeren Werkstoffen oder Halbleitermaterialien, insbesondere Indiumphosphid, besteht und beispielsweise einen linearen elektrooptischen Effekt oder Elektroabsorption ausnützt.

Diese Möglichkeiten der optischen Pulserzeugung können in der Erfindung beispielsweise dann eingesetzt werden, wenn die Signalpulstaktfrequenz SPTF kleiner als die Referenzpulstaktfrequenz RPTF und somit kleiner als die maximale Arbeitstaktfrequenz ist und die elektronische Verarbeitung und elektrooptische Wandlung der Signalpulstaktfrequenz SPTF in ausreichend hoher Geschwindigkeit durchgeführt werden können. Der erfindungsgemäße Vorteil der Einrichtung besteht in diesem Fall in der Vermeidung der elektronischen Verarbeitung der vergleichsweise höheren Referenzpulstaktfrequenz RPTF, also der maximalen Arbeitstaktfrequenz, bei gleichzeitiger Einhaltung der gewünschten Phasenstarrheit der Synchronisation. In diesem Fall ist es vorteilhaft, wenn der Phasenvergleicher PV auf einem nichtlinearen optischen Effekt beruht.

Weitere Ausgestaltungsmöglichkeiten der Erfindung durch Einrichtungen zur Erzeugung periodischer Pulse in einem Laser oder einem optisch verstärkenden Medium sind in einer Reihe von Veröffentlichungen beschrieben:

In Electronics Letters, Band 28, No. 8, 9. April 1992, Seiten 738 bis 739, ist ein selbstpulsierender Laser beschrieben.

In Electronics Letters, Band 24, No. 14, 7. Juli 1988, Seiten 848 bis 850, sind optische Bauelemente mit auf sich bezogenem elektrooptischem Effekt beschrieben, die im Englischen als 'self-electro-optic effect device', kurz 'SEED', bezeichnet werden. Auch diese Bauelemente lassen sich als optische Pulsquellen, aber auch für eine Reihe anderer optischer Funktionen und Effekte einsetzen. Für die Funktion als optische Pulsquelle kann ein solches Bauelement in Kombination mit einem parallel zu den elektrischen Anschlüssen liegenden elektrischen Resonator, dessen Resonanzfrequenz gleich der gewünschten optischen Pulsfrequenz ist, betrieben werden. In dieser Funktion wird die Bistabilität des Bauelements ausgenützt. Es ist leicht einzusehen, daß viele Arten von bistabilen optischen Bauelementen sich ebenfalls zur Erzeugung kurzer Signalpulse SP, aber auch für eine Reihe anderer nichtlinearer Anwendungen einsetzen lassen.

Im Tagungsband der IOOC/ECOC '91, Paris, September 1991, Band 1, Beitrag MoC1-2, Seiten 77 bis 80, ist eine selbstschwingende optische Pulsquelle beschrieben, die aus einem Laser in Kombination mit einem externen Resonator besteht.

In IEEE Photonics Technology Letters, Band 2, No. 3, März 1990, Seiten 203 bis 204 ist ein optischer Fabry-Perot-Resonator beschrieben, der durch seine hohe Güte aus dem Spektrum der eingestrahlten modulierten Lichtpulse, d.h. der Referenzpulse RP, die Referenzpulstaktfrequenz RPTF herausfiltert und als Signalpulstaktfrequenz SPTF des als Signalpulse SP verwendeten Resonatorausgangssignals wieder abgibt.

Ein bekanntes Verfahren zur Herstellung kurzer optischer Pulse beruht auf der Synchronisation eines Lasers bezüglich seiner Moden, im Englischen als 'mode-locking' bezeichnet.

Ein Laser oder ein optisch verstärkendes Medium erhält in diesem Verfahren einen Resonator. Durch Modulation einer verstärkenden oder dämpfenden Einrichtung, realisiert z.B. als ein Teil des Lasers, mit elektrischen oder optischen Signalen erreicht man, daß die Phasen aller Moden so synchronisiert werden, daß sie gemeinsam kurze Pulse hoher Energie bilden. Voraussetzung ist, daß die Umlaufzeit von Signalen im Resonator wenigstens näherungsweise gleich einem ganzzahligen Vielfachen der Periodendauer der Referenzpulstaktfrequenz RPTF der als synchronisierende Signale dienenden elektrischen oder optischen Referenzpulse ist. Das Grundprinzip der Synchronisation eines Lasers bezüglich seiner Moden, 'mode-locking', ist beispielsweise in 'Optical Electronics', A. Yariv, Verlag Holt, Rinehart and Winston, New York, 1985 beschrieben. Von besonderem Interesse für die Erzeugung schneller Signalpulse SP mit einer hohen Signalpulstaktfrequenz SPTF, d.h. Wiederholfrequenz dieser Signalpulse SP, sind monolithische Ausführungen solcher Einrichtungen. Ausführungsbeispiele sind in IEEE Photonics Technology Letters, Band 3, No. 10, Oktober 1991, Seiten 874 bis 876, im Tagungsband der Optical Fiber Communication Conference (OFC '92), San José, USA, Band 1, Beitrag ThB1, Seite 193, und in den darin enthaltenen Literaturstellen beschrieben. Man kann auf die aktive Modensynchronisation durch ein elektrisches Signal verzichten, wenn die Modensynchronisation passiv durch einen im Resonator angebrachten sättigbaren Absorber vorgenommen wird. Wegen der Sättigbarkeit des Absorbers transmittiert dieser Absorber starke Impulse am besten, sodaß sich automatisch starke Signalpulse SP mit einer wegen der limitierten zur Verfügung stehenden Energie kurzen Dauer bilden.

Ein weiteres Verfahren zur Herstellung kurzer optischer Pulse wird als Gewinn-Schalten, Güte-Schalten, im Englischen 'gain-switching', 'Q-switching', bezeichnet. Beim aktiven Gewinn-Schalten werden durch elektrische Modulation eines Lasers kurze optische Impulse erzeugt. Das Verfahren ist z.B. im schon erwähnten Band 'Optical Electronics', A. Yariv, Verlag Holt, Rinehart and Winston, New York, 1985 beschrieben. Ähnlich wie bei der passiven Modensynchronisation ist auch das Gewinn-Schalten in passiver, keinen elektrischen Oszillator benötigender Form möglich, wie in der erwähnten Veröffentlichung in IEEE Photonics Technology Letters, Band 3, No. 10, Oktober 1991, Seiten 942 bis 944 beschrieben.

Eine vorteilhafte Ausgestaltung der Erfindung kombiniert den nach dem Stand der Technik üblichen Phasenvergleich in einem Phasenvergleicher PV mit der ebenfalls nach dem Stand der Technik üblichen Art der nicht phasenstarren Synchronisation optischer Signalpulse SP durch Injektion optischer Referenzpulse RP über einen Signalpulserzeuger-Referenzpulseingang SPERPE in den Signalpulserzeuger SPE. Durch die Injektion der optischen Referenzpulse RP in den Signalpulserzeuger SPE erreicht man im Signalpulserzeuger SPE eine nicht phasenstarre, aber durch vergleichsweise geringe Verzögerungs- und/oder Ansprechzeiten charakterisierte Synchronisation der Signalpulse SP bezüglich der zugeführten Referenzpulse RP, bzw. der Signalpulstaktfrequenz SPTF der Signalpulse SP bezüglich der Referenzpulstaktfrequenz RPTF der Referenzpulse RP. Durch die zusätzliche Anwesenheit des Phasenvergleichers PV, des Reglers R, und des Rückkopplungspfads bis zu einem Signalfrequenzregeleingang SFRE des Signalpulserzeugers SPE wird Phasenstarrheit zwischen der Signalpulstaktfrequenz SPTF und der Referenzpulstaktfrequenz RPTF erzielt. Diese Ausgestaltung ist insbesondere in solchen Anwendungen vorteilhaft, in denen die Signallaufzeit in Phasenvergleicher PV, Regler R, bzw. gesamtem Rückkopplungspfad so groß ist, daß eine Synchronisation des Signalpulserzeugers SPE allein in der Art einer Phasenregelschleife ungenügend stabile, unstabile, und/oder Phasenänderungen der Referenzpulse RP nicht genügend oder nicht genügend schnell nachbildende Signalpulse SP ergeben würde. In vielen Anwendungsfällen wird man versuchen, die Injektion der Referenzpulse RP in den Signalpulserzeuger SPE nur auf optischen Effekten beruhen zu lassen, z.B. durch direkte Injektion der optischen Referenzpulse RP in einen die optischen Signalpulse SP erzeugenden, passiv gewinngeschalteten oder bezüglich seiner Moden passiv synchronisierten Laser. Gleichfalls möglich ist die Umwandlung der Referenzpulse RP in einem opto-elektrischen Wandler, beispielsweise einer Fotodiode, in elektrische Signale und Beeinflussung eines die Signalpulstaktfrequenz SPTF der Signalpulse SP bestimmenden elektrischen Oszillators. Mit einer solchen Ausgestaltung der Erfindung ist es möglich, alle oben beschriebenen, aus der Literatur bekannten, aber auch alle möglichen weiteren Arten der nicht phasenstarren Synchronisation von Signalpulsen SP gegenüber Referenzpulsen RP in entsprechende phasenstarre Synchronisation umzuwandeln. Das in diesem Ausführungsbeispiel der Erfindung verwendete Prinzip der Kombination der Injektion von Referenzpulsen RP in einen Signalpulse SP erzeugenden Signalpulserzeuger SPE und Erzielen der Phasenstarrheit durch Phasenvergleich von Referenzpulsen RP mit Signalpulsen SP in einem Phasenvergleicher PV, Einspeisen des Phasenvergleichssignals PVS von einem Ausgang PVA des Phasenvergleichers PV in einen Reglereingang eines Reglers R, und Verbindung des Reglerausgangs RA mit einem Signalfrequenzregeleingang SFRE des Signalpulserzeugers SPE ist nicht auf den Bereich der Optik beschränkt. Es kann vielmehr in allen Bereichen der Signalverarbeitung, insbesondere bei der elektrischen Signalverarbeitung und in den Bereichen der Elektronik, Regelungs-, Nachrichten-, Rundfunk- und Richtfunktechnik eingesetzt werden. In diesen Bereichen werden die im Bereich der Optik optischen Signale wie die Referenzpulse RP und die Signalpulse SP natürlich durch entsprechende elektrische Signale ersetzt. In diesen Bereichen, aber auch in der Optik, ist es auch nicht zwingend notwendig, kurze Pulse zu verwenden, sondern man kann insbesondere z.B. längere Pulse und/oder sinusförmige Signale verwenden.

Falls die optischen Signalpulse SP in einem bezüglich seiner Moden passiv synchronisierten Laser oder in einer anderen Art von selbstpulsierendem Laser oder optischer Quelle als Signalfrequenzerzeuger SFE erzeugt werden, ist es vorteilhaft, das Ausgangssignal des Reglers R in solcher Weise einem Signalfrequenzregeleingang SFRE des Lasers bzw. der selbstpulsierenden optischen Quelle bzw. des Signalpulserzeugers SPE einzuspeisen, daß mindestens ein Strom und/oder eine Temperatur dieses Lasers, dieser optischen Quelle und/oder Signalpulserzeugers SPE verändert werden, was wiederum die Signalpulstaktfrequenz SPTF dieses Lasers, dieser optischen Quelle bzw. Signalpulserzeugers SPE verändert. So vermeidet man die Notwendigkeit eines elektrischen Oszillators, der mit der u.U sehr hohen Signalpulstaktfrequenz SPTF schwingen muß. Dieses Prinzip läßt sich wegen der Strom- und/oder Temperaturabhängigkeit gewisser Eigenschaften der meisten optischen Bauelemente vorteilhaft bei verschiedenen zur Erzeugung der Signalpulse SP verwendeten Lasern, selbstpulsierenden optischen Quellen und/oder optischen Bauelementen mit auf sich bezogenem elektrooptischem Effekt einsetzen.

Für weitere vorteilhafte Ausführungsbeispiele der Erfindung wird der Phasenvergleicher PV unter Ausnützung des äußerst schnellen optischen Kerr-Effekts realisiert. In diesen Ausführungsbeispielen können Referenzpulstaktfrequenz RPTF und/oder Signalpulstaktfrequenz SPTF insbesondere so hoch sein, daß sie durch opto-elektronische Wandler, wie z.B. Fotodetektoren, sowie durch elektronische Einrichtungen, wie z.B. Verstärker, Multiplizierer und Digitalschaltungen, nicht mehr verarbeitet werden könnten. Für die Ausnützung des Kerr-Effekts zum Phasenvergleich läßt man ein starkes optisches Signal, das Pumpsignal PU, mindestens einen Parameter eines anderen, meist schwächeren optischen Signals, des Probensignals PR, verändert. Bei dem Parameter handelt es sich um die optische Phase, die Ausbreitungsgeschwindigkeit, den Frequenzgehalt, die Polarisation und/oder die Leistung. In der Regel tritt das Pumpsignal PU auch an mindestens einem Ausgang einer auf dem Kerr-Effekt beruhenden Signalverarbeitungseinrichtung auf. Zur Nutzung des Probensignals PR allein müssen deshalb in der Regel eines oder mehrere optische Filter eingesetzt werden, die störende Pumpsignale PU abdämpfen.

Eine solche als Phasenvergleicher PV einsetzbare nichtlineare optische Einrichtung ist der aus IEEE Photonics Technology Lett., Vol. 4, März 1992, Seiten 260 bis 263 bekannte nichtlineare optische Faserschleifenspiegel. In dieser Einrichtung wird durch Applikation eines Pumpsignals PU (in der genannten Literaturstelle: 'control beam') ein Probensignal PR (in der genannten Literaturstelle: 'signal beam') wahlweise zu einem Ausgang (in der genannten Literaturstelle: 'XMIT') geschaltet. Das Probensignal PR wird über einen Eingang in den Faserspiegel eingekoppelt. Probensignalanteile durchlaufen die Schleife des Faserspiegels in beiden Richtungen des als nichtlineares Kerr-Medium dienenden Lichtwellenleiters. Die durch den Kerr-Effekt bedingte nichtlineare Phasenverschiebung $\Delta\phi$, die ein Probensignal PR in einem Lichtwellenleiter durch ein an der gleichen Stelle und zur gleichen Zeit vorhandenes, vorteilhafterweise vergleichsweise stark gewähltes optisches Pumpsignal PU erfährt, beträgt

$$\Delta\phi = 4\pi\, n_2\, PL \,/\, (xA\lambda)$$

wobei P die optische Pumpleistung, A der Lichtwellenleiterquerschnitt, L die Lichtwellenleiterlänge, $\lambda$ die Lichtwellenlänge und $n_2$ eine Konstante sind. Die Konstante $n_2$ hat für die üblichen Lichtwellenleitern aus Quarzglas etwa die Größe $3*10^{-16}$ cm$^2$/W. Die Größe x ist dimensionslos. Sie hat den Wert 1, wenn die optischen Polarisationen von Probensignal PR und Pumpsignal PU identisch sind und vergrößert sich bei zunehmenden Diskrepanzen zwischen den beiden Polarisationszuständen bis zum Maximalwert 3, der für orthogonale Polarisationen von Probensignal PR und Pumpsignal PU gilt. Bei Abwesenheit des Pumpsignals PU erfährt das Signal in beiden Richtungen gleiche, lediglich lineare Phasenverschiebungen durch die Laufzeit im Lichtwellenleiter. Da sich bei Kopplung eines Lichtsignals von einem Lichtwellenleiter in einen anderen eine Phasenverschiebung dieses Lichtsignals um 90° ergibt, addieren sich die in beiden Richtungen umlaufenden Probensignale dann in Phase, wenn der den Eingang des nichtlinearen optischen Faserschleifenspiegels bildende Koppler von beiden optischen Signalen gleich oft und in gleicher Weise durchlaufen wird. Diese Bedingung ist erfüllt für Lichtsignale, die am Probensignaleingang wieder austreten. Deshalb wirkt die Anordnung bei Abwesenheit eines Pumpsignals PU wie ein Spiegel. Bei Anwesenheit eines Pumpsignals PU, das die Schleife des Faserspiegels nur in einer Richtung durchläuft, erfährt ein Probensignal, für das die Pumpleistung größer als Null ist, d.h. das mit dem Pumpsignal PU zeitlich und räumlich überlappt, eine optische Phasenverschiebung. Falls das Pumpsignal PU keine konstante Leistung besitzt, sondern beispielsweise aus kurzen Impulsen besteht, wird das in die gleiche Richtung wie das Pumpsignal PU und gleichzeitig mit den Pumpsignalpulsen laufende Probensignal im Mittel einer größeren Pumpleistung unterworfen sein als das in der Gegenrichtung laufende entsprechende Probensignal. Wegen des Phasenunterschieds tritt das Probensignal nicht mehr oder nicht mehr vollständig am Probensignaleingang aus, sondern vollständig oder teilweise am Ausgang (in der genannten Literaturstelle: 'XMIT').

Wie man aus der Polarisationsabhängigkeit der Größe x sieht, ist die durch den Kerr-Effekt erzielte Phasenänderung in hohem Maße abhängig von den Polarisationen des Probensignals PR und des Pumpsignals, sodaß ohne besondere Vorkehrungen mit einer Polarisationsabhängigkeit der Funktion einer auf dem Kerr-Effekt beruhenden Phasenänderung zu rechnen ist. In der genannten Literaturstelle wird durch besondere Maßnahmen eine näherungsweise von der Polarisation des Pumpsignals PU unabhängige Funktion. Die Funktion ist jedoch von der Polarisation des Probensignals PU abhängig.

Statt einer Glasfaser als nichtlineares Kerr-Medium kann in allen Fällen der Anwendung des Kerr-Effekts natürlich auch ein beliebiger anderer Lichtwellenleiter mit Kerr-Effekt eingesetzt werden. Dieser Tatsache trägt die alternative Bezeichnung des nichtlinearen optischen Faserschleifenspiegels als nichtlineares Sagnac-Interferometer Rechnung, die beispielsweise im Tagungsband der Optical Fiber Communications Conference (OFC '92), Vortrag TuC3, Seite 12, Band 1, San José, USA, 1992, statt dem Terminus eines nichtlinearen optischen Faserschleifenspiegels verwendet wird. Auch in dieser Anordung können nur Probensignale PR einer bestimmten Polarisation verarbeitet werden.

In der im Tagungsband der Optical Fiber Communications Conference, OFC '92, San José, USA, Beitrag TuI1, Band 1, auf der Seite 46 bis 47 beschriebenen Arbeit ist ein auf dem optischen Kerr-Effekt beruhender optischer Schalter und Demultiplexer beschrieben. Auch in diesem Fall ist die Funktion von der Polarisation des Pumpsignals abhängig. Der Kerr-Effekt wird in diesem Fall in Form der ebenfalls auf der Phasenverschiebung beruhenden Vierwellenmischung genutzt, bei der Signale, welche bezüglich des Probensignals PR andere optische Frequenzen aufweisen, entstehen.

Die Möglichkeit einer von der Polarisation des Probensignals PR unabhängigen Einrichtung zur Ausnutzung des Kerr-Effekts ist aus Electronics Letters, Band 28, Nr. 11, 21. Mai 1992, Seiten 1070 bis 1072, bekannt. Die Schaltfunktion nutzt zwar den Kerr-Effekt, aber beruht weder auf einem nichtlinearen optischen Faserspiegel bzw. nichtlinearen Sagnac-Interferometer, noch auf optischer Vierwellenmischung. In dieser Arbeit, in der der Kerr-Effekt zur optischen Frequenzverschiebung des Probensignals eingesetzt wird, verändert sich beim Schalten die optische Frequenz bzw. Wellenlänge des Probensignals. Durch frequenz- bzw. wellenlängenselektive optische Filter läßt sich die Frequenzverschiebung in Amplitudenänderungen umformen. Während der Anstiegszeit eines optischen Pumpsignals PU verändert sich die Phase des Probensignal PR nichtlinear durch den Kerr-Effekt als Funktion der Zeit, so daß die Ableitung dieser nichtlinearen Phasenänderung nach der Zeit einer optischen Frequenzverschiebung des optischen Probensignals PR entspricht. Während der Abfallzeitzeit eines optischen Pumpsignals PU verändert sich die Phase des Probensignal PR nichtlinear durch den Kerr-Effekt als Funktion der Zeit in der entgegengesetzten Richtung, sodaß die Ableitung dieser entgegengesetzten nichtlinearen Phasenänderung nach der Zeit einer optischen Frequenzverschiebung des optischen Probensignals PR in die entgegengesetzte Richtung entspricht. Verwendet man je ein optisches Bandpassfilter für optische Frequenzen, die oberhalb der optischen Frequenz des nicht nichtlinear beeinflußten Probensignals PR liegen, und optische Frequenzen, die unterhalb der optischen Frequenz des nicht nichtlinear beeinflußten Probensignals PR liegen, detektiert man das Ausgangssignal jedes dieser beiden optischen Bandpassfilter und bildet man die Differenz zwischen den beiden detektierten Bandpassfilterausgangssignalen, so nimmt diese Differenz Werte einer Polarität an, wenn das Probensignal PR zeitlich überwiegend in die Anstiegsphase des Pumpsignals PU gefallen ist, bzw. Werte der anderen Polarität, wenn das Probensignal PR zeitlich überwiegend in die Abfallphase des Pumpsignals PU gefallen ist, sodaß diese Differenz wenigstens näherungsweise proportional zur zeitlichen Lage des Probensignals PR bezüglich des Pumpsignals PU ist. Eine Möglichkeit der Realisierung zweier solcher Bandpaßfilter ist ein optisches Interferometer, wie z.B. ein Mach-Zehnder-Interferometer oder Michelson-Interferometer.

Zur Realisierung eines Phasenvergleichers PV mit Hilfe des Kerr-Effekts verwendet man entweder die Signalpulse SP als optisches Pumpsignal PU und die Referenzpulse RP als optisches Probensignal PR, oder man verwendet die Signalpulse SP als optisches Probensignal PR und die Referenzpulse RP als optisches Pumpsignal PU. Die letztere Möglichkeit bietet vorteilhaft die Möglichkeit, bei modulierten Referenzpulsen RP ein Phasenvergleichssignal PVS zu gewinnen, dessen Tiefpaßanteil lediglich bezüglich seiner Amplitude, nicht aber Polarität, als Funktion der Modulation schwankt. In Figur 2 sind die zeitlichen Verläufe eines Probensignals PR, eines Pumpsignals PU und die durch dieses Pumpsignal PU verursachten, zur Leistung dieses Pumpsignals PU nichtlinearen Phasenverschiebung $\Delta\phi$ des Probensignals PR schematisch dargestellt. Der Einfachheit halber ist das Pumpsignal PU und somit auch die Phasenverschiebung $\triangle\phi$ mit einem rechteckförmigen Verlauf gezeichnet, während es in der Praxis häufig eine verrundete Form, ähnlich der des Probensignals PR aufweist. Im Zeitraum zwischen den Zeitpunkten $t_1$ und $t_2$ weist in der schematischen Figur 2 das Pumpsignal PU eine Leistung auf, die zu einer nichtlinearen Phasenverschiebung $\triangle\phi$ der Größe $\pi$ führt. Deshalb wird das Probensignal auch nur in diesem Zeitraum nichtlinear beeinflußt. Als Phasenvergleichssignal PVS des Phasenvergleichers PV bildet und verwendet man die Differenz eines Referenzsignals RS und eines detektierten, durch das Pumpsignal PU beeinflußten Anteils G des Probensignals PR. Im zeitlichen Mittel ist dieser beeinflußte Anteil G gleich der Fläche des um $\pi$ phasenverschobenen Anteils des Probensignals PR. Als Referenzsignal RS verwendet man vorteilhaft eine Größe, deren Wert etwa gleich der Hälfte der möglichen Maximalgröße des beeinflußten Anteils G ist, sodaß das Phasenvergleichssignal PVS als Differenz sowohl positive als auch negative Werte annehmen kann. Da die Leistung des Probensignals PR und somit auch die Größe des beeinflußten Anteils G schwanken kann, ist es auch vorteilhaft, das Referenzsignal proportional zur durchschnittlichen Leistung des im wesentlichen nicht beeinflußten Probensignals PR zu gestalten. In manchen Fällen gewinnt man neben einem dem beeinflußten Anteil G des Probensignals auch den nicht beeinflußten Anteil NG des Probensignals. In Figur 2 ist als zeitlicher Mittelwert dieses Anteils NG die Größe der Fläche des nicht phasenverschobenen Anteils des Probensignals PR anzusehen.

Als Nutzanteile der elektrischen Signale G, NG, RS, PVS
- für die Synchronisation der Signalpulstaktfrequenz SPTF bezüglich der Referenzpulstaktfrequenz RPTF,
- für die Phasenstarrheit zwischen der Signalpulstaktfrequenz SPTF und der Referenzpulstaktfrequenz RPTF und/oder
- im Phasenvergleicher PV
sind in diesem Ausführungsbeispiel nicht etwa die relativ kurzen, also auch hohe Frequenzen enthaltenden, in Figur 2 dargestellten Impulse zu bezeichnen, sondern lediglich die jeweiligen Gleichanteile oder zeitlichen Mittelwerte. Die Tatsache, daß die hochfrequenten elektrischen Signalanteile für die Funktion der Einrichtung nicht notwendig sind, also keine Nutzanteile darstellen, erklärt sich daraus, daß der ein lineares System darstellende Regler R eine gegenüber der Signalpulstaktfrequenz SPTF und der Referenzpulstaktfrequenz RPTF vergleichsweise niedrige obere Grenzfrequenz besitzen darf und i.a. auch besitzt, sodaß hochfrequente Anteile der elektrischen Signale G, NG, RS, PVS nicht weiterverarbeitet werden. Eine weitere plausible Erklärung für den erwähnten Sachverhalt ist, daß die Signale G, NG, RS, PVS ohne Beeinträchtigung der Funktion der Einrichtung durch Tiefpaßfilter geleitet werden könnten, deren Grenzfrequenzen klein gegenüber der Signalpulstaktfrequenz SPTF und der Referenzpulstaktfrequenz RPTF sind. Diese Erklärung wird nicht dadurch beeinträchtigt, daß die Grenzfrequenzen dieser Filter natürlich ähnlich groß oder größer als die Grenzfrequenz des Reglers R sein müßten.

Ausführungen eines Phasenvergleichers PV, in denen das Phasenvergleichssignal PVS aus der Differenz eines Referenzsignals RS und eines detektierten, durch das Pumpsignal PU beeinflußten Anteils G des Probensignals PR gebildet wird, sowie die erwähnten Möglichkeiten zur Bildung des Referenzsignals RS sind nicht auf die Verwendung des Kerr-Effekts als nichtlinearer optischer Effekt beschränkt. Vielmehr können auch andere nichtlineare optische Effekte eingesetzt werden. Dazu zählt die erwähnte nichtlineare Gewinnsättigung in manchen Materialien, z.B. in optisch verstärkenden Elementen wie Laserverstärkern und insbesondere Halbleiter-Laserverstärkern, als nichtlinearer optischer Effekt einzusetzen. Die nichtlineare Gewinnsättigung in Halbleiter-Laserverstärkern etwa hat gegenüber dem Kerr-Effekt in Quarzglas den Vorteil, daß sie schon mit weit geringeren Leistungen und weit geringeren optischen Weglängen auskommt. Auch die erwähnten sättigbaren Absorber, wie z.B. Halbleiter-Laserverstärker, die nicht elektrisch gepumpt werden, bilden einen nichtlinearen optischen Effekt, der sich erfindungsgemäß in einem Phasenvergleicher PV einsetzen läßt.

Um Änderungen der Polarisation von optischen Signalen zu verhindern, werden in der Optik oft polarisationserhaltende Lichtwellenleiter verwendet. Polarisationserhaltende Lichtwellenleiter erhalten entweder alle Polarisationen, weil sie eine sehr geringe Doppelbrechung besitzen, oder sie erhalten zwei zueinander orthogonale Hauptpolarisationsmoden, weil sie eine sehr hohe Doppelbrechung, entsprechend einer Differenz der Ausbreitungsgeschwindigkeit, zwischen diesen zwei zueinander orthogonalen Hauptpolarisationsmoden besitzen. Solche stark doppelbrechende Lichtwellenleiter erhalten für ein eingespeistes optisches Signal mit einer Polarisation, die eine dieser Hauptpolarisationsmoden ist, diese Hauptpolarisationsmode an jedem Ort dieser doppelbrechenden Lichtwellenleiter. Setzt man einen Lichtwellenleiter der zuletzt genannten Art ein, kommt es über größere Lichtwellenleiterlängen zu einer zeitlichen Separation von optischen Signalen verschiedener Polarisationen. Um solches zu vermeiden, kann man einen polarisationserhaltenden Lichtwellenleiter aus mehreren Stücken polarisationserhaltender Lichtwellenleiter zusammensetzen, sodaß die Laufzeitdifferenz für Lichtsignale der einen erhaltenen Polarisation gegenüber solchen der anderen erhaltenen Polarisation gering gehalten wird durch Aneinanderfügen von Lichtwellenleitern mit positiver sowie solchen mit negativer Laufzeitdifferenz für diese verschiedenen Polarisationen von Lichtsignalen. Vorteilhafte Ausführungsbeispiele der Erfindung setzen solche Lichtwellenleiter im Phasenvergleicher PV oder in anderen Teilen der erfindungsgemäßen Einrichtung ein.

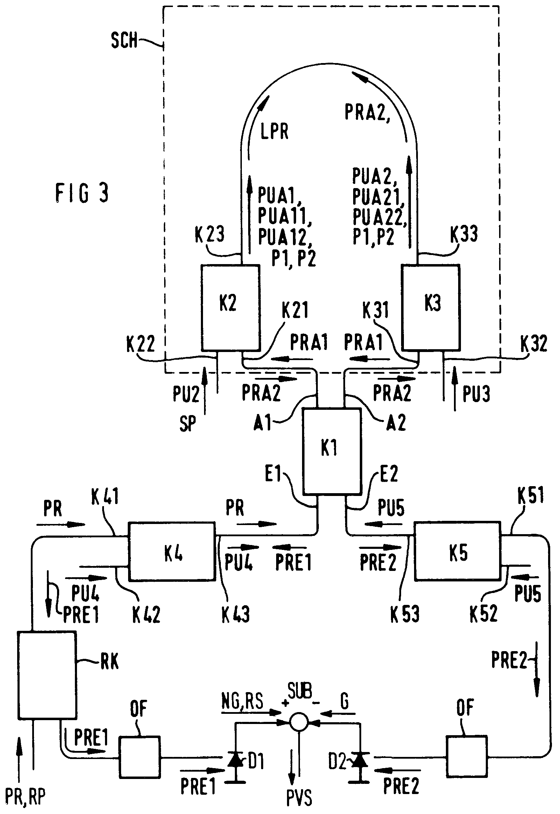

Zur Erläuterung des in Figur 3 dargestellten Ausführungsbeispiel des erfindungsgemäßen Phasenvergleichers sei hier zunächst der Stand der Technik betreffend nichtlineare optische Faserschleifenspiegel erklärt. Das in der Figur 3 dargestellte Ausführungsbeispiel weist einen optischen Koppler K1 mit zwei Eingangstoren E1, E2 und zwei Ausgangstoren A1, A2 auf. In das Eingangstor E1 wird ein optisches Probensignal PR eingespeist. Die optische Schleifenverbindung SCH ist in beiden Richtungen lichtdurchlässig. Sie verbindet die beiden Ausgangstore A1, A2 des Kopplers K1 miteinander. Die Schleifenverbindung SCH beinhaltet einen nichtlinearen Schleifenverbindungsteil NLSCH, der einen Kerr-Effekt aufweist. Der Kerr-Effekt ist beispielsweise präsent in normalen Lichtwellenleitern aus Quarzglas. In anderen Lichtwellenleitern, die eine größere Konstante $n_2$ besitzen, erzielt man einen höheren Kerr-Effekt, sodaß man mit kleineren Pumpsignalleistungen und/oder kleineren Längen der Schleifenverbindung SCH auskommt. Solche Lichtwellenleiter sind in IEEE Photonics Technology Letters, Band 4, 1992, No. 4, auf den Seiten 362 bis 365 beschrieben. Die Anordnung der Schleifenverbindung SCH in Figur 3 bewirkt, daß der am Ausgangtor A1 austretende optische Probensignalanteil PRA1 in das Ausgangstor A2 und der am Ausgangtor A2 austretende Probensignalanteil PRA2 in das Ausgangstor A1 eingespeist werden. Diese Signale werden wiederum durch den Koppler K1 geleitet, sodaß an mindestens einem seiner Eingangstore E1, E2 Anteile PRE1, PRE2 des optischen Probensignals austreten. Die Anordnung weist außerdem mindestens eine Pumpsignaladditionsstelle K2, K3, K4, K5 auf, durch die mindestens ein optisches Pumpsignal PU2, PU3, PU4, PU5 von einem Eingang K22, K32, K42, K52 zu einem Ausgang K23, K33, K43, K53 der jeweiligen Pumpsignaladditionsstelle geführt wird. Anzahl und Orte der Pumpsignaladditionsstellen werden so gewählt, daß die Pumpsignale oder Anteile davon so in die optische Schleifenverbindung eingeführt werden, daß die Pumpsignale sich durch den Schleifenverbindungsteil NLSCH nur in einer Richtung ausbreiten. Die Funktion der Anordnung beruht darauf, daß die Beeinflussung der in den zwei entgegengesetzten Richtungen laufenden Probensignale durch einen nichtlinearen Kerr-Effekt unterschiedlich erfolgt, weil die Pumpsignale sich synchron nur mit einem der beiden Probensignale ausbreiten.

Ein Fall, in dem sich Pumpsignale nur in einer Richtung ausbreiten, ist einfach dadurch zu erzielen, daß beispielsweise nur an der Pumpsignaladditionsstelle K2 oder nur and der Pumpsignaladditionsstelle K3 ein Pumpsignal PU2 bzw. PU3 eingekoppelt wird. Ein anderer solcher Fall wird erzielt, wenn beispielsweise nur über die Pumpsignaladditionsstelle K4 oder nur über die Pumpsignaladditionsstelle K5 ein Pumpsignal PU4 bzw. PU5 eingekoppelt wird und der Koppler K1 Eingangssignale an den Eingängen E1, E2 nicht zu gleichen Teilen auf die beiden Ausgänge A1, A2 aufteilt. Eine vorteilhafte Ausführung des zuletzt erwähnten Falles verwendet einen Koppler K1, der für die Wellenlänge des optischen Pumpsignals ein stark asymmetrisches Koppelverhältnis aufweist, für die Wellenlänge des Probensignals jedoch ein näherungsweise symmetrisches.

Der eine austretende, vom optischen Faserschleifenspiegel geschaltete Probensignalanteil PRE2 wird, falls eine Pumpsignaladditionsstelle K5 vorhanden ist, durch diese hindurchgeleitet, wird anschließend durch ein optisches Filter OF geleitet, das etwaige Anteile des oder der Pumpsignale abdämpft und wird in einem Detektor D2 detektiert, der ein Detektorsignal G erzeugt. Der andere austretende, vom optischen Faserschleifenspiegel nicht geschaltete Probensignalanteil PRE1 wird zumindest in manchen Ausführungsbeispielen, falls eine Pumpsignaladditionsstelle K4 vorhanden ist, durch diese hindurchgeleitet, wird anschließend durch ein optisches Filter OF geleitet, das etwaige Anteile des oder der Pumpsignale abdämpft und wird in einem Detektor D1 detektiert, der ein Detektorsignal NG erzeugt. In diesem Ausführungsbeispiel dient das Detektorsignal NG, welches einem vom nichtlinearen optischen Faserschleifenspiegel nicht geschalteten Probensignalanteil entspricht, als Referenzsignal RS. Das Phasenvergleichssignal PVS wird in einem Subtrahierer SUB gebildet als die Differenz zwischen dem Referenzsignal RS und dem Detektorsignal G, welches einem vom nichtlinearen optischen Faserschleifenspiegel geschalteten Probensignalanteil entspricht. Statt des Detektorsignals NG könnte man als Referenzsignal RS auch eine konstante Größe oder ein zum Probensignal PR proportionales Signal verwenden.

Eine von der Polarisation des Probensignals PR unabhängige Einrichtung zur Ausnutzung des Kerr-Effekts ist aus Electronics Letters, Band 28, Nr. 20, 1992, Seiten 1864 bis 1866, bekannt. Die Schaltfunktion beruht auf einem unter Verwendung polarisationserhaltender Lichtwellenleiter aufgebauten nichtlinearen optischen Faserspiegel bzw. nichtlinearen Sagnac-Interferometer. In dieser bekannten Arbeit werden aber weder Signalpulse SP erzeugt, noch findet eine phasenstarre Synchronisation statt, noch findet ein Phasenvergleich statt.

In einer weiteren vorteilhaften erfindungsgemäßen Ausgestaltung des Phasenvergleichers PV wird sichergestellt, daß der Phasenvergleicher von der Polarisation mindestens des Probensignals unabhängig ist. Anzahl und Orte der Pumpsignaladditionsstellen werden dazu so gewählt, daß die Pumpsignale oder Anteile davon so in die optische Schleifenverbindung eingeführt werden, daß im Schleifenverbindungsteil NLSCH Pumpsignalanteile PUA11, PUA12, PUA21, PUA22 zweier zueinander orthogonaler Polarisationen P1, P2 auftreten, welche an mindestens einer Stelle des Schleifenverbindungsteils NLSCH sich in mindestens einem der drei Parameter zeitliche Verzögerung, Ausbreitungsgeschwindigkeit und Ausbreitungsrichtung unterscheiden. Dadurch ist sichergestellt, daß zumindest an dieser Stelle oder zumindest zu gewissen Zeiten sich nicht alle diese Pumpsignalanteile kohärent addieren. Durch diese Tatsache können Pumpsignalanteile zweier orthogonaler Polarisationen zumindest an einer Stelle des Schleifenverbindungsteils NLSCH individuell Probensignale beeinflussen. Im Ausführungsbeispiel des Phasenvergleichers PV der Figur 3 werden beispielsweise die Signalpulse SP als Pumpsignal PU2 benutzt. Es wird mindestens ein doppelbrechender Lichtwellenleiter als Kerr-Medium eingesetzt, und das Pumpsignal wird so in diesen doppelbrechenden Lichtwellenleiter eingekoppelt, daß mindestens näherungsweise die eine Hälfte der Leistung dieses Pumpsignals einer Polarisation, die eine dieser Hauptpolarisationsmoden ist, und die andere Hälfte der Leistung dieses Pumpsignals einer Polarisation, die die andere dieser Hauptpolarisationsmoden ist, zuzuordnen sind, sodaß die Funktion des Phasenvergleichers PV und somit auch das Phasenvergleichssignal PVS wenigstens näherungsweise von der Polarisation der im Ausführungsbeispiel als Probensignal PR Referenzpulse RP unabhängig ist. In ähnlicher Weise kann man auch einen optischen Vierwellenmischer wenigstens näherungsweise von der Polarisation des Probensignals PR bzw. der Referenzpulse RP unabhängig machen.

In einem anderen Ausführungsbeispiel wird ein Pumpsignalanteil PU2 über die Pumpsignaladditionsstelle K2 mit einer bestimmten Polarisation P1 eingekoppelt. Über die weitere Pumpsignaladditionsstelle K3 wird ein weiterer Pumpsignalanteil PU3 eingekoppelt, der eine andere, zur Polarisation P1 orthogonale Polarisation P2 aufweist. Auch in diesem Fall ist also sichergestellt, daß die sich in den zwei entgegengesetzten Richtungen ausbreitenden Pumpsignalanteile PUA1, PUA2 unterscheiden, sodaß die Beeinflussung der Probensignals PR unabhängig von der Polarisation dieses Probensignals PR ist.

**Patentansprüche**

1.  Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,** daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind, daß in den zum Erzielen der Taktfrequenzsynchronisation der Signalpulse und der Referenzpulse verwendeten Teilen der Einrichtung und/oder in den zum Erzielen der Phasensynchronisation zwischen Signalpulsen und Referenzpulsen verwendeten Teilen der Einrichtung einschließlich Phasenvergleicher (PV) gegenüber der maximalen Arbeitstaktfrequenz der Einrichtung niederfrequentere Nutzanteile der verwendeten elektrischen Signale ausgewertet werden und daß dabei ein auf der Gewinnsättigung von Laserverstärkern, insbesondere Halbleiterlaserverstärkern, basierendes optisches Bauelement vorgesehen ist.

2.  Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,** daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind,

daß in den zum Erzielen der Taktfrequenzsynchronisation der Signalpulse und der Referenzpulse verwendeten Teilen der Einrichtung und/oder

in den zum Erzielen der Phasensynchronisation zwischen Signalpulsen und Referenzpulsen verwendeten Teilen der Einrichtung einschließlich Phasenvergleicher (PV)

gegenüber der maximalen Arbeitstaktfrequenz der Einrichtung niederfrequentere Nutzanteile der verwendeten elektrischen Signale ausgewertet werden und daß dabei ein, eine nichtlineare Abhängigkeit des optischen Ausgangssignals eines sättigbaren Absorbers, insbesondere eines nicht elektrisch gepumpten Halbleiterverstärkers, vom Eingangssignal dieses Absorbers ausnutzendes optisches Bauelement vorgesehen ist.

**3.** Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,**

daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind,

daß in den zum Erzielen der Taktfrequenzsynchronisation der Signalpulse und der Referenzpulse verwendeten Teilen der Einrichtung und/oder

in den zum Erzielen der Phasensynchronisation zwischen Signalpulsen und Referenzpulsen verwendeten Teilen der Einrichtung einschließlich Phasenvergleicher (PV)

gegenüber der maximalen Arbeitstaktfrequenz der Einrichtung niederfrequentere Nutzanteile der verwendeten elektrischen Signale ausgewertet werden und daß dabei ein auf der Änderung des Brechungsindizes eines Wellenleiters, insbesondere eines Wellenleiters als Teil eines nichtlinearen Wellenleitergitterkopplers, der Halbleitermaterial aufweisen kann, basierendes optisches Bauelement vorgesehen ist.

**4.** Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,**

daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind,

daß in den zum Erzielen der Taktfrequenzsynchronisation der Signalpulse und der Referenzpulse verwendeten Teilen der Einrichtung und/oder

in den zum Erzielen der Phasensynchronisation zwischen Signalpulsen und Referenzpulsen verwendeten Teilen der Einrichtung einschließlich Phasenvergleicher (PV)

gegenüber der maximalen Arbeitstaktfrequenz der Einrichtung niederfrequentere Nutzanteile der verwendeten elektrischen Signale ausgewertet werden und daß dabei ein auf dem optischen Kerr-Effekt basierendes optisches Bauelement vorgesehen ist.

**5.** Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,**

daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind,

daß in den zum Erzielen der Taktfrequenzsynchronisation der Signalpulse und der Referenzpulse verwendeten Teilen der Einrichtung und/oder

in den zum Erzielen der Phasensynchronisation zwischen Signalpulsen und Referenzpulsen verwendeten Teilen der Einrichtung einschließlich Phasenvergleicher (PV) gegenüber der maximalen Arbeitstaktfrequenz der Einrichtung niederfrequentere Nutzanteile der verwendeten elektrischen Signale ausgewertet werden und daß dabei insbesondere im Signalpulserzeuger (SPE) ein optisches Bauelement mit auf sich bezogenem elektrooptischem Effekt vorgesehen ist.

6. Einrichtung zur phasenstarren Synchronisation zweier optischer Signale mit einer optischen Phasenregelschleife, die eine Signallichtquelle, eine Referenzlichtquelle, einen Regler und einen Frequenz- und Phasenvergleicher enthält, **dadurch gekennzeichnet,** daß zur Synchronisation optischer Signalpulse mit optischen Referenzpulsen hinsichtlich deren Pulstaktfrequenz und Pulsphase als Signallichtquelle ein Signalpulserzeuger (SPE), als Referenzlichtquelle ein Referenzpulserzeuger (RPE) und ein Phasenvergleicher (PV) vorgesehen sind, wobei am Ausgang des Phasenvergleichers ein Phasenvergleichssignal auftritt, das wenigstens für kleine Beträge proportional der Differenz zwischen dem n-fachen der Phase der Signalimpulse und dem m-fachen der Phase der Referenzpulse ist, wobei sowohl m als auch n natürliche Zahlen sind, daß in den zum Erzielen der Taktfrequenzsynchronisation der Signalpulse und der Referenzpulse verwendeten Teilen der Einrichtung und/oder in den zum Erzielen der Phasensynchronisation zwischen Signalpulsen und Referenzpulsen verwendeten Teilen der Einrichtung einschließlich Phasenvergleicher (PV) gegenüber der maximalen Arbeitstaktfrequenz der Einrichtung niederfrequentere Nutzanteile der verwendeten elektrischen Signale ausgewertet werden und daß dabei ein insbesondere der Signalpulserzeuger (SPE) ein bistabiles optisches Bauelement aufweist.

7. Einrichtung nach Ansprüchen 1 - 6, **dadurch gekennzeichnet,** daß der Signalpulserzeuger (SPE) zusätzlich mit einem Eingang (SPREPE) für Referenzpulse (RP) verbunden ist und daß die dem Signalpulserzeuger (SPE) zugeführten Referenzpulse zur insbesondere optischen Synchronisation der Taktfrequenz der Signalpulse bezüglich der Taktfrequenz der Referenzpulse dienen.

8. Einrichtung nach Ansprüchen 1 - 7, **dadurch gekennzeichnet,** daß der Signalpulserzeuger (SPE) wenigestens ein optisch verstärkendes Element oder einen Laser aufweist, die bezüglich ihrer Moden synchronisiert sein können.

9. Einrichtung nach Anspruch 4, **dadurch gekennzeichnet,** daß im Phasenvergleicher (PV) zur Ausnutzung des optischen Kerr-Effektes ein nichtlinearer optischer Faserschleifenspiegel bzw. ein nichtlineares Sagnac-Interferometer vorgesehen ist.

10. Einrichtung nach Anspruch 9, **dadurch gekennzeichnet,** daß im Phasenvergleicher (PV) aus den Signalpulsen (SP) ein optisches Probensignal und aus den Referenzpulsen ein optisches Pumpsignal erzeugt wird, und daß das Phasenvergleichssignal als Ausgangssignal des Phasenvergleichers (PV) mittels eines Subtrahierers aus der Differenz eines Referenzsignals und eines detektierten, durch das Pumpsignal beeinflußten Anteils des Probensignals gebildet wird.

11. Einrichtung nach Anspruch 10, **dadurch gekennzeichnet,** daß das Referenzsignal proportional zu einem detektierten Anteil des Probensignals ist, wobei dieser Anteil durch das Pumpsignal wenigstens näherungsweise nicht oder in einer der Richtung der Beeinflussung des beeinflußten Anteils des Probensignals entgegengesetzten Richtung beeinflußt ist.

12. Einrichtung nach Ansprüchen 1 - 11, **dadurch gekennzeichnet,** daß der Phasenvergleicher (PV) wenigstens einen polarisationserhaltenden, doppelbrechenden, eine Differenz der Ausbreitungsgeschwindigkeit zwischen zwei zueinander orthogonalen Hauptpolarisationsmoden aufweisenden Lichtwellenleiter enthält, der für ein eingespeistes optisches Signal mit einer Polarisation entsprechend einer dieser Hauptpolarisationsmoden die Polarisation an jedem Ort des doppelbrechenden Lichtwellenleiters aufrechterhält.

13. Einrichtung nach einem der Ansprüche 4 oder 12, **dadurch gekennzeichnet,** daß mindestens ein polarisationserhaltender Lichtwellenleiter als Kerr-Medium eingesetzt ist, daß das Pumpsignal so in diesen doppelbrechenden Lichtwellenleiter eingekoppelt ist, daß wenigstens angenähert die eine Hälfte der Leistung dieses Pumpsignals eine Polarisation entsprechend einer der Hauptpolarisationsmoden des Lichtwellenleiters aufweist und die andere Hälfte der Leistung des Pumpsignals eine Polarisation entsprechend dem anderen Hauptpolarisationsmodus aufweist und daß dadurch die Funktion des Phasenvergleichers (PV) und damit auch das erzeugte Phasenvergleichssignal wenigstens näherungsweise von der Polarisation des Probensignals unabhängig sind.

FIG 1

FIG 2

FIG 3